(19) Europäisches Patentamt
European Patent Office
Office européen des brevets

(11) Veröffentlichungsnummer: **0 274 099 B1**

(12) **EUROPÄISCHE PATENTSCHRIFT**

(45) Veröffentlichungstag der Patentschrift: **18.03.92**

(51) Int. Cl.[5]: **C08F 10/06**, C08F 4/64

(21) Anmeldenummer: **87118717.5**

(22) Anmeldetag: **17.12.87**

# (54) Verfahren zum Herstellen von Homo- und Copolymerisaten des Propens mittels eines Ziegler-Natta-Katalysatorsystems.

(30) Priorität: **24.12.86 DE 3644436**

(43) Veröffentlichungstag der Anmeldung:
**13.07.88 Patentblatt 88/28**

(45) Bekanntmachung des Hinweises auf die Patenterteilung:
**18.03.92 Patentblatt 92/12**

(84) Benannte Vertragsstaaten:
**AT BE DE ES FR GB IT NL**

(56) Entgegenhaltungen:
**EP-A- 0 144 021**
**FR-A- 2 452 498**
**US-A- 4 467 044**

(73) Patentinhaber: **BASF Aktiengesellschaft**
**Carl-Bosch-Strasse 38**
**W-6700 Ludwigshafen(DE)**

(72) Erfinder: **Werner, Rainer Alexander, Dr.**
**Berliner Strasse 14**
**W-6702 Bad Duerkheim(DE)**
Erfinder: **Zolk, Ralf, Dr.**
**Gerhard-Hauptmann-Strasse 33**
**W-6717 Hessheim(DE)**
Erfinder: **Schweier, Guenther, Dr.**
**Friedrich-Pietzsch-Strasse 14**
**W-6701 Friedelsheim(DE)**

**EP 0 274 099 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft ein Verfahren zum Herstellen von Homopolymerisaten des Propens sowie Copolymerisaten des Propens mit untergeordneten Mengen anderer $C_2$- bis $C_{12}$-, insbesondere $C_2$- bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 20 bis 70 bar, mittels eines Ziegler-Natta-Katalysatorsystems aus

(1) einer Titankomponente, die Titan, Magnesium, Chlor sowie ein Benzolcarbonsäurederivat auf einem anorganisch-oxidischen Trägerstoff enthält,

(2) einer Aluminiumkomponente der Formel

$$Al\ R_3,$$

worin steht
R für einen nicht mehr als 8, insbesondere nicht mehr als 4 Kohlenstoffatome aufweisenden Alkylrest,
sowie
(3) einer Silankomponente der Formel

$$R^1_n\ Si(OR^2)_{4-n},$$

worin stehen
$R^1$ für einen nicht mehr als 16, vorzugsweise nicht mehr als 10 Kohlenstoffatome aufweisenden Aryl- oder Alkylrest, insbesondere den Phenylrest,
$R^2$ für einen nicht mehr als 15, vorzugsweise nicht mehr als 8, und insbesondere nicht mehr als 4 Kohlenstoffatome aufweisenden Alkylrest,
n für eine Zahl von 0 bis 3, vorzugsweise von 0 bis 2, und insbesondere die Zahl 1,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200, und das Molverhältnis Aluminiumkomponente (2) : Silankomponente (3) 1 : 0,03 bis 1 : 0,8, insbesondere 1 : 0,05 bis 1 : 0,5 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus EP-A-17 895 und EP-A-144 021, der EP-B-45977, der AU-A-543 049 und GB-B-21 43 834 bekannten Verfahren genannt werden können.

Die speziellen Ausgestaltungen der Katalysatorsysteme werden vorgenommen, um bestimmte Ziele zu erreichen, wie die folgenden:

Das Katalysatorsystem soll leicht herstellbar sein und eine erhöhte Ausbeute an Polymerisat, welches einen möglichst großen isotaktischen Anteil zu enthalten hat, liefern, wobei das Aktivitätsmaximum über einen längeren Zeitraum relativ konstant bleiben soll. Zusätzlich ist besonders im Hinblick auf die Thermodynamik der Verfahrensführung eine leichte Molekulargewichtsregelung, insbesondere mit Wasserstoff, von großer Bedeutung.

Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats - besonders im Hinblick auf Korrosionsprobleme - von Bedeutung, was durch Steigerung der Polymerausbeute und/oder ein Katalysatorsystem zu erreichen ist, welches möglichst wenig Halogen enthält.

Manche dieser Ziele sind nach dem Stand der Technik nur mit sehr aufwendigen Verfahren zu erreichen, wie es z.B. beim Verfahren gemäß der US-A-4 399 054 der Fall ist, oder dann, wenn man andere Ziele zurücksetzt:
So ist z.B. aus der GB-B-2 049 709 ein Verfahren bekannt, bei dem ein Magnesiumhalogenid, ein Titanhalogenid und ein Elektronendonor auf einen Metalloxidträger aufgebracht werden. Um eine gute Produktivität zu erhalten, ist jedoch eine zusätzliche Chlorierung des Metalloxidträgers erforderlich; zudem weist das erhaltene Polymerisat eine vergleichsweise niedrige Isotaktizität auf.

In den EP-A-14 523 und EP-A-171 200 sowie den GB-B-2 101 609 und GB-B-2 101 611 werden Katalysatorsysteme beschrieben, deren Titankomponente durch Behandeln eines festen, anorganischen Oxids mit einer organischen Magnesiumverbindung, einer Lewis-Base und Titantetrachlorid erhalten wird, wobei zusätzlich ein Halogenierungsmittel, das kein Titantetrachlorid ist und/oder eine organische Verbindung der Metalle Bor, Aluminium, Silicium oder Zinn oder ein Bortrihalogenid oder ein Halogenatome enthaltender Alkohol eingesetzt werden muß. Trotz aufwendiger und langwieriger Herstellungsweise ist die Produktivität des entsprechenden Katalysatorsystems nicht befriedigend.

Aus der US-A-4 467 044 ist ein Katalysatorsystem bekannt,welches als Titankomponente einen Siliciumdioxidträger, ein Magnesiumhalogenid und/oder Manganhalogenid, ein Titanhalogenid und einen Elektronendonor enthält. Um Katalysatorsysteme relativ hoher Produktivität zu erhalten, ist hier eine zusätzliche Behandlung mit einer metallorganischen Verbindung eines Metalls der Gruppen

I bis III des Periodensystems unerläßlich. Produktivität und Stereospezifität der so dargestellten Katalysatoren sind jedoch - absolut gesehen - nur gering.

Die bekannten Verfahren lassen somit Wünsche offen, insbesondere was eine hohe Isotaktizität und gute Morphologie bei zugleich guter Produktivität betrifft.

Hier setzt die Aufgabenstellung der vorliegenden Erfindung an, nämlich eine Titankomponente zu schaffen, die gegenüber den Verfahren des Standes der Technik bei zugleich hoher Produktivität Polymerisate mit hoher Isotaktizität und guter Morphologie zu liefern vermag.

Es wurde gefunden, daß die gestellte Aufgabe gelöst werden kann mit einem Katalysatorsystem, das eine aus (I) Magnesiumchlorid, (II) einem bestimmten Alkanol, (III) einem bestimmten Trägerstoff, (IV) Titantetrachlorid sowie (V) einem speziell ausgewählten Phthalsäureabkömmling in drei Stufen in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$- bis $C_{12}$ -, insbesondere $C_2$-bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 20 bis 70 bar, mittels eines Ziegler-Natta-Katalysators aus

(1) einer Titankomponente, die Titan, Magnesium, Chlor sowie ein Benzolcarbonsäurederivat auf einem anorganisch-oxidischen Trägerstoff enthält,

(2) einer Aluminiumkomponente der Formel

$$Al\,R_3,$$

worin steht

R für einen nicht mehr als 8, insbesondere nicht mehr als 4 Kohlenstoffatome aufweisenden Alkylrest,

sowie

(3) einer Silankomponente der Formel

$$R^1_n\,Si(OR^2)_{4-n},$$

worin stehen

$R^1$ für einen nicht mehr als 16, vorzugsweise nicht mehr als 10 Kohlenstoffatome aufweisenden Aryl- oder Alkylrest, insbesondere den Phenylrest,

$R^2$ für einen nicht mehr als 15, vorzugsweise nicht mehr als 8, und insbesondere nicht mehr als 4 Kohlenstoffatome aufweisenden Alyklrest,

n für eine Zahl von 0 bis 3, vorzugsweise von 0 bis 2, und insbesondere die Zahl 1,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200 und das Molverhältnis Aluminiumkomponente (2) : Silankomponente (3) 1 : 0,03 bis 1 : 0,8, insbesondere 1 : 0,05 bis 1 : 0,5 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe ein festphasiges Vorprodukt herstellt aus (I) feinteiligem Magnesiumchlorid, (II) einem $C_1$- bis $C_8$ -, vorzugsweise $C_2$-bis $C_6$-, insbesondere $C_2$- bis $C_4$-Alkanol, (III) einem feinteiligen, porösen, anorganisch-oxidischen Trägerstoff, der einen Teilchendurchmesser von 1 bis 1000, insbesondere 10 bis 400 µm, ein Porenvolumen von 0,3 bis 3, insbesondere 1 bis 2,5 $cm^3/g$ sowie eine Oberfläche von 100 bis 1000, insbesondere 200 bis 400 $m^2/g$ besitzt und die Formel $SiO_2 \cdot a\,Al_2O_3$ - worin a steht für eine Zahl im Bereich von 0 bis 2, insbesondere 0 bis 0,5 - hat, (IV) Titantetrachlorid sowie (V) einem Phthalsäureabkömmling der Formel

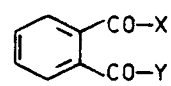

worin stehen X und Y gemeinsam für Sauerstoff oder X sowie Y für Chlor oder einen $C_1$- bis $C_{10}$-, vorzugsweise $C_2$- bis $C_8$-Alkoxyrest, insbesondere für Chlor, derart, daß man zuerst entweder a)

(1.1.1.a) in einer ersten Unterstufe in einem flüssigen inerten Kohlenwasserstoff, insbesondere einem Alkan, unter ständiger Durchmischung bei einer Temperatur im Bereich von 0 bis 140, insbesondere 40 bis 120 °C, das Magnesiumchlorid (I) und das Alkanol (II) zusammenbringt, wobei mengenmäßig eingesetzt werden auf 10 Gewichtsteile des Magnesiumchlorids (I) 20 bis 1000, insbesondere 50 bis 400 Gewichtsteile des Kohlenwasserstoffs sowie auf 10 Molteile des Magnesiumchlorids (I) 10 bis 80, insbesondere 20 bis 60 Molteile des Alkanols (II), und das Zusammengebrachte während 0,1 bis 6, insbesondere 0,2 bis 2 Stunden bei einer Temperatur im Bereich von 20 bis 140, insbesondere 40 bis 120 °C hält, anschließend

(1.1.2.a) in einer zweiten Unterstufe unter ständiger Durchmischung bei einer Temperatur im Bereich von 0 bis 140, insbesondere 40 bis

120 °C, in das aus der ersten Unterstufe resultierende Reaktionsgemisch den Trägerstoff (III) einbringt, wobei mengenmäßig eingesetzt werden auf 10 Gewichtsteile des Magnesiumchlorids (I) 20 bis 100, insbesondere 30 bis 60 Gewichtsteile des Trägerstoffs (III),

oder b)

(1.1.1.b) in einer ersten Unterstufe unter ständiger Durchmischung bei einer Temperatur im Bereich von 0 bis 140, insbesondere 40 bis 120 °C, das Magnesiumchlorid (I) und das Alkanol (II) zusammenbringt, wobei mengenmäßig eingesetzt werden auf 10 Molteile des Magnesiumchlorids (I) 100 bis 1000, insbesondere 150 bis 500 Molteile des Alkanols (II), und das Zusammengebrachte während 0,1 bis 6, insbesondere 0,2 bis 2 Stunden bei einer Temperatur im Bereich von 20 bis 140, insbesondere 40 bis 120 °C hält, anschließend

(1.1.2.b) in einer zweiten Unterstufe unter ständiger Durchmischung bei einer Temperatur im Bereich von 0 bis 140, insbesondere 40 bis 120 °C, in das aus der ersten Unterstufe resultierende Reaktionsgemisch den Trägerstoff (III) einbringt, wobei mengenmäßig eingesetzt werden auf 10 Gewichtsteile des Magnesiumchlorids (I) 20 bis 100, insbesondere 30 bis 60 Gewichtsteile des Trägerstoffs (III), und das Ganze unter Gewinnung eines festphasigen Umsetzungsprodukts zu Trockene einengt,

und hierauf

(1.1.3) in einer dritten Unterstufe in einem flüssigen, inerten Kohlenwasserstoff, insbesondere einem Alkan, unter ständiger Durchmischung bei einer Temperatur im Bereich von -20 bis 40, insbesondere 10 bis 30 °C, das in der zweiten Unterstufe erhaltene festphasige Umsetzungsprodukt und das Titantetrachlorid (IV) zusammenbringt, wobei mengenmäßig eingesetzt werden auf 100 Molteile des Alkohols (II) 20 bis 300, vorzugsweise 30 bis 200, insbesondere 50 bis 150 Molteile des Titantetrachlorids (IV) sowie auf 10 Gewichtsteile des Trägerstoffs (III) 10 bis 100, vorzugsweise 10 bis 80, insbesondere 15 bis 60 Gewichtsteile des Kohlenwasserstoffs - und das Zusammengebrachte während 0,1 bis 4, insbesondere 0,2 bis 2,5 Stunden auf einer Temperatur im Bereich von 10 bis 150, insbesondere 30 bis 120 °C hält und das dabei resultierende festphasige Vorprodukt unter Abtrennung der flüssigen Phase isoliert,

mit der Maßgabe, daß zumindest im Zuge einer der Unterstufen (1.1.1) bis (1.1.3) der Phthalsäureabkömmling (V) eingebracht wird, wobei mengenmäßig eingesetzt werden auf 100 Molteile des Magnesiumchlorids (I) 1 bis 100, vorzugsweise 5 bis 60, insbesondere 10 bis 40 Molteile des Phthalsäureabkömmlings, dann

(1.2) in einer zweiten Stufe das aus der ersten Stufe erhaltene festphasige Vorprodukt bei einer Temperatur im Bereich von 100 bis 150, insbesondere 115 bis 135 °C, während einer Zeitspanne von 0,2 bis 5, insbesondere 0,4 bis 3 Stunden einer ein- oder mehrstufigen oder kontinuierlichen Extraktion mit Titantetrachlorid unterzieht, wobei mengenmäßig eingesetzt werden auf 10 Gewichtsteile des aus der ersten Stufe erhaltenen festphasigen Vorprodukts insgesamt 10 bis 1000, vorzugsweise 20 bis 800, insbesondere 40 bis 300 Gewichtsteile des Titantetrachlorids, und schließlich

(1.3) in einer dritten Stufe das in der zweiten Stufe gewonnene festphasige Zwischenprodukt solange mit einem flüssigen inerten Kohlenwasserstoff, insbesondere einem Alkan, extrahiert, bis der Feststoff 0,01 bis 30, vorzugsweise 0,03 bis 20, insbesondere 0,05 bis 10 Gew.-% Titan enthält - und derart die Titankomponente (1) gewinnt.

Zu dem erfindungsgemäßen Verfahren ist im einzelnen das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensionspolymerisationsverfahren oder - insbesondere - Trockenphasenpolymerisationsverfahren. Die erwähnten technologischen Ausgestaltungen - mit anderen Worten: die technologischen Varianten der Polymerisation von $\alpha$-Monoolefinen nach Ziegler-Natta - sind aus der Literatur und Praxis wohlbekannt, so daß sich nähere Ausführungen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das Folgende zu sagen:

(1) Der zur Herstellung der Titankomponente einzusetzende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt: Pentane, Hexane, Heptane, Benzine und Cyclohexan.

Das gleichfalls einzusetzende feinteilige Magnesiumchlorid (I) kann ein einschlägig übliches sein. Es sollte im wesentlichen wasserfrei sein,

d.h. sein Gehalt an Wasser sollte 1 Gew.-% der Gesamtmenge an Magnesiumchlorid nicht überschreiten.

Die zur Herstellung der Titankomponente (1) einzusetzenden Alkanole (II) können handelsübliche sein;sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol, besonders geeignet ist n-Butanol.

Der weiterhin einzusetzende Trägerstoff (III) wird im allgemeinen ein Alumosilikat oder - insbesondere - ein Siliciumdioxid sein; wichtig ist, daß er die geforderten Eigenschaften besitzt. Wie sich gezeigt hat, sind die der gegebenen Spezifikation entsprechenden im Handel erhältlichen, einschlägig üblichen Trägerstoffe gut geeignet.

Das zur Herstellung der Titankomponente (1) ebenfalls einzusetzende Titantetrachlorid (IV) sollte ein bei Ziegler-Natta-Katalysatorsystemen übliches sein.

Auch der einzusetzende, oben näher definierte Phthalsäureabkömmling (V) kann ein handelsüblicher sein; er sollte vorteilhafterweise einen hohen Reinheitsgrad aufweisen. Wie sich gezeigt hat, ist für den erfindungsgemäßen Zweck ganz besonders gut Phthalsäuredichlorid geeignet, aber auch das Phthalsäureanhydrid sowie die Phthalsäuredialkylester, wie insbesondere der Di-n-butylester.

Das zur Herstellung der Titankomponente (1) in Stufe (1.3) einzusetzende Alkan kann ebenfalls ein übliches sein; es sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.1), (1.2) und (1.3) ist lediglich zu erwähnen, daß die Isolierung des jeweils resultierenden Feststoffs zweckmäßigerweise durch Absaugen erfolgt, dem in Stufe (1.1) zweckmäßigerweise ein Waschen mit einem flüssigen, inerten Kohlenwasserstoff folgen sollte, bis dieser kein Titantetrachlorid mehr aufnimmt. Wie sich gezeigt hat, kann es auch zweckmäßig sein, das in der zweiten Unterstufe (1.1.2.a) erhaltene festphasige Umsetzungsprodukt vor seinem Einsatz in der dritten Unterstufe (1.1.3) zu isolieren, etwa durch Einengen bis zur Trockene.

(2) Als Aluminiumkomponenten (2) mit der angegebenen Formel kommen die einschlägig üblichen in Betracht. Diese sind aus Literatur und Praxis so wohlbekannt, daß darauf nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxyphenylsilan der angegebenen Formel. Als herausragender Vertreter ist Triethoxyphenylsilan zu nennen. Ferner seien Tri-n-propoxysowie Tri-n-butoxyphenylsilan und auch Dimethoxydiphenylsilan als Beispiele genannt

Das erfindungsgemäße Verfahren erlaubt es, Homo- und Copolymerisate, z.B. des binären oder ternären Typs, - auch Blockcopolymerisate - des Propens mit untergeordneten Mengen anderer $C_2$- bis $C_{12}$-$\alpha$-Monoolefine in vorteilhafter Weise herzustellen, wobei besonders geeignete zu polymerisierende comonomere $\alpha$-Monoolefine wie beispielsweise Ethen, Buten-1, 4-Methylpenten-1 und Hexen-1 sind; es eignen sich aber auch z.B. n-Okten-1, n-Decen-1 sowie n-Dodecen-1.

Beispiel 1

Herstellen der Titankomponente (1)

Es wird so verfahren, daß man zunächst

(1.1) in einer ersten Stufe ein festphasiges Vorprodukt herstellt aus (I) feinteiligem Magnesiumchlord, (II) n-Butanol, (III) einem feinteiligen, porösen, anorganisch-oxidischen Trägerstoff, der einen Teilchendurchmesser von 20 bis 45 $\mu$m, ein Porenvolumen von 1,75 $cm^3/g$ sowie eine Oberfläche von 320 $m^2/g$ besitzt und die Formel $SiO_2$ hat, (IV) Titantetrachlorid sowie (V) Phthalsäuredichlorid, derart, daß man zuerst

(1.1.1.a) in einer ersten Unterstufe in n-Heptan unter ständiger Durchmischung mittels Rühren bei einer Temperatur im Bereich von 40 bis 50 °C das Magnesiumchlorid (I) und das n-Butanol (II) zusammenbringt - wobei mengenmäßig eingesetzt werden auf 10 Gew.-Teile des Magnesiumchlorids (I) 90 Gew.-Teile des n-Heptans sowie auf 10 Molteile des Magnesiumchlorids (I), 60 Molteile des n-Butanols (II) - und das Zusammengebrachte während 0,5 Stunden bei der Siedetemperatur des n-Heptans (ca. 98 °C) hält, anschließend

(1.1.2.a) in einer zweiten Unterstufe unter ständiger Durchmischung mittels Rühren bei einer Temperatur im Bereich von 65 bis 75 °C, in das aus der ersten Unterstufe resultierende Reaktionsgemisch den Trägerstoff (III) einbringt - wobei mengenmäßig eingesetzt werden auf 10 Gew.-Teile des Magnesiumchlorids (I) 40 Gew.-Teile des Trägerstoffs (III) - das Ganze 10 Minuten bei der genannten Temperatur beläßt und dann im Vakuum zur Trockene einengt, hierauf

(1.1.3) in einer dritten Unterstufe in n-Heptan unter ständiger Durchmischung mittels Rühren bei einer Temperatur von 25 °C das in der zweiten Unterstufe erhaltene festphasige Umsetzungsprodukt und das Titantetrachlorid (IV) zusammenbringt - wobei mengenmäßig eingesetzt werden auf 100 Molteile des n-Butanols (II) 120 Molteile des Titantetrachlorids (IV) sowie auf 10 Gew.-Teile des Trägerstoffs (III), 20 Gew.-Teile des n-Heptans - anschließend das Phthalsäuredichlorid (V) einbringt - wobei mengenmäßig eingesetzt werden auf 100 Molteile des Magnesiumchlorids (I), 27 Molteile des Phthalsäuredichlorids (V) - das Zusammengebrachte unter Rühren während 0,25 Stunden auf einer Temperatur von 100 ° C hält, und das dabei resultierende festphasige Vorprodukt unter Abtrennung der flüssigen Phase mittels Absaugen isoliert, dann

(1.2) in einer zweiten Stufe das aus der ersten Stufe erhaltene festphasige Vorprodukt bei einer Temperatur von 125 ° C während einer Zeitspanne von jeweils 0,5 Stunden einer zweistufigen Extraktion mit Titantetrachlorid unterzieht - wobei mengenmäßig eingesetzt werden auf 10 Gew.-Teile des aus der ersten Stufe erhaltenen festphasigen Vorprodukts jeweils 70, d.h. insgesamt 140 Gew.-Teile des Titantetrachlorids - hierauf das entstandene festphasige Zwischenprodukt mittels Filtration isoliert und schließlich

(1.3) in einer dritten Stufe das in der zweiten Stufe gewonnene festphasige Zwischenprodukt solange mit n-Heptan extrahiert, bis der Feststoff 4,3 Gew.-% Titan enthält und derart die Titankomponente (1) gewinnt.

Polymerisation

Ein Stahlautoklav von 10-l-Volumen, ausgerüstet mit einem Rührer, wird mit 50 g Polypropenpulver, 20 mMol Aluminiumtriethyl (in Form einer 1-molaren Lösung in n-Heptan) als Aluminiumkomponente (2), 2 mMol Triethoxyphenylsilan (in Form einer 1-molaren Lösung in n-Heptan) als Silankomponente (3), 5 Normalliter Wasserstoff und schließlich 0,18 mMol, gerechnet als Titan, der oben beschriebenen Titankomponente (1) bei 30 ° C beschickt. Die Reaktortemperatur wird binnen 10 Minuten auf 70 ° C, der Reaktordruck mittels Aufpressen von gasförmigem Propen in dieser Zeit auf 28 bar gebracht.

Die eigentliche Polymerisation wird unter ständigem Rühren bei 70 ° C und 28 bar während 2 Stunden durchgeführt, hierbei verbrauchtes Monomer wird kontinuierlich durch frisches ersetzt.

Die Produktivität der Katalysatorkomponente (1), der heptanlösliche Anteil (als Maß für die Isotaktizität) und die Kornverteilung des dabei erhaltenen Polymerisats sind in der nachstehenden Tabelle zusammengestellt.

Beispiel 2

Herstellen der Titankomponente (1)

Es wird so verfahren, daß man zunächst

(1.1) in einer ersten Stufe ein festphasiges Vorprodukt herstellt aus (I) feinteiligem Magnesiumchlorid, (II) n-Butanol, (III) einem feinteiligen, porösen, anorganisch-oxidischen Trägerstoff, der einen Teilchendurchmesser von 20 bis 45μm, ein Porenvolumen von 1,75 $cm^3$/g sowie eine Oberfläche von 320 $m^2$/g besitzt und die Formel $SiO_2$ hat, (IV) Titantetrachlorid sowie (V) Phthalsäuredichlorid, derart, daß man zuerst

(1.1.1.b) in einer ersten Unterstufe unter ständiger Durchmischung mittels Rühren bei eine Temperatur im Bereich von 25 bis 30 ° C das Magnesiumchlorid (I) und das n-Butanol (II) zusammenbringt - wobei mengenmäßig eingesetzt werden auf 10 Molteile des Magnesiumchlorids (I), 200 Molteile des n-Butanols (II) - und das Zusammengebrachte während 0,5 Stunden bei einer Temperatur von 118 ° C hält, anschließend

(1.1.2.b) in einer zweiten Unterstufe unter ständiger Durchmischung mittels Rühren bei einer Temperatur im Bereich von 75 bis 80 ° C, in das aus der ersten Unterstufe resultierende Reaktionsgemisch zunächst das Phthalsäuredichlorid (V) einbringt - wobei mengenmäßig eingesetzt werden auf 100 Molteile des Magnesiumchlorids (I), 30 Molteile des Phthalsäuredichlorids (V) - , dann den Trägerstoff (III) einbringt - wobei mengenmäßig eingesetzt werden auf 10 Gew.-Teile des Magnesiumchlorids (I) 40 Gew.-Teile des Trägerstoffs (III) - das Ganze 10 Minuten bei der genannten Temperatur beläßt und dann unter Gewinnung eines festphasigen Umsetzungsprodukts im Vakuum zur Trockene einengt, hierauf

(1.1.3) in einer dritten Unterstufe in n-Heptan unter ständiger Durchmischung mittels Rühren bei einer Temperatur von 25 ° C, das in der zweiten Unterstufe erhaltene festphasige Umsetzungsprodukt und das Titantetrachlorid (IV) zusammenbringt - wobei mengenmäßig eingesetzt werden auf 100 Molteile des n-Butanols (II) 140 Molteile des Titantetrachlorids (IV) sowie auf 10 Gew.-Teile des Trägerstoffs (III), 50 Gew.-Teile des n-Heptans -, das Zusammengebrachte unter Rühren während 0,5 Stunden auf einer Temperatur von 100 ° C hält, und das dabei resultierende festphasige Vorprodukt unter Abtrennung der flüssigen Phase mittels Absaugen isoliert, dann

(1.2) in einer zweiten Stufe das aus der ersten Stufe erhaltene festphasige Vorprodukt bei einer Temperatur von 125 ° C während einer Zeitspanne von jeweils 0,5 Stunden einer zweistufigen Extraktion mit Titantetrachlorid unterzieht - wobei mengenmäßig eingesetzt werden auf 10 Gew.-Teile des aus der ersten Stufe erhaltenen festphasigen Vorprodukts jeweils 70, d.h. insgesamt 140 Gew.-Teile des Titantetrachlorids - hierauf das entstandene festphasige Zwischenprodukt mittels Filtration isoliert und schließlich (1.3) in einer dritten Stufe das in der zweiten Stufe gewonnene festphasige Zwischenprodukt solange mit n-Heptan extrahiert, bis der Feststoff 4,5 Gew.-% Titan enthält und derart die Titankomponente (1) gewinnt.

Polymerisation

Sie erfolgt wie im Beispiel 1; zum hierbei erreichten Polymerisationsergebnis siehe ebenfalls die folgende Tabelle.

Vergleichsversuch

Herstellen der Titankomponente

Es wird verfahren wie im Beispiel 1 der US-A-4 467 044 unter Verwendung des im Beispiel 1 der vorliergenden Erfindung definierten Trägerstoffes. Man erhält eine Titankomponente, deren Gehalt an Titan 4,3 Gew.-% beträgt.

Polymerisation

Ein Stahlautoklav von 10 l Volumen, ausgerüstet mit einem Rührer, wird mit 50 g Polypropenpulver, 24 mMol Aluminiumtriethyl (in Form einer 1-molaren Lösung in n-Heptan) als Aluminiumkomponente, 1,08 g Methyl-p-toluat, 60 mg der Titankomponente und 5 Normalliter Wasserstoff bei 30 ° C beschickt. Die weitere Versuchsdurchführung erfolgt wie im Beispiel 1 der vorliegenden Erfindung beschrieben.

Zum dabei erreichten Polymerisationsergebnis siehe wiederum die nachstehende Tabelle.

| | Produktivität (g PP/g Kat.) | Heptanlösliche Anteile (Gew.-%) | Kornverteilung (mm) <0,25 | 0,25-0,5 | 0,5-1 | 1-2 | >2 |
|---|---|---|---|---|---|---|---|
| Beispiel 1 | 6 670 | 2,9 | 5,2 | 14,3 | 72,5 | 7,6 | 0,4 |
| Beispiel 2 | 6 500 | 2,0 | 2,0 | 6,5 | 70,3 | 20,8 | 0,4 |
| Vergleichsversuch | 3 600 | 22,4 | 2,2 | 4,7 | 18,2 | 66,4 | 8,5 |

Wie aus der Tabelle zu ersehen ist, weist die Katalysatorkomponente aus dem Vergleichsversuch eine wesentlich geringere Produktivität und Stereospezifität auf als die Katalysatorkomponenten aus den erfindungsgemäßen Beispielen. Darüber hinaus ist die Kornverteilung in einen Bereich unerwünscht großer Partikel verschoben.

**Patentansprüche**

**1.** Verfahren zum Herstellen von Homopolymerisaten des Propens sowie Copolymerisaten des Propens mit untergeordneten Mengen anderer $C_2$- bis $C_{12}$-$\alpha$-Monoolefine durch Polymerisation des bzw. der Monomeren bei Temperaturen von 20 bis 160 ° C und Drücken von 1 bis 100 bar mittels eines Ziegler-Natta-Katalysatorsystems aus

(1) einer Titankomponente, die Titan, Magnesium, Chlor sowie ein Benzolcarbonsäurederivat auf einem anorganisch-oxidischen Trägerstoff enthält,

(2) einer Aluminiumkomponente der Formel

$$Al\ R_3,$$

worin steht

R für einen nicht mehr als 8 Kohlenstoffatome aufweisenden Alkylrest,

sowie

(3) einer Silankomponente der Formel

$$R^1_n\ Si(OR^2)_{4-n},$$

worin stehen

$R^1$ für einen nicht mehr als 16 Kohlenstoffatome aufweisenden Aryl- oder Alkylrest,

$R^2$ für einen nicht mehr als 15 Kohlenstoffatome aufweisenden Alkylrest,

n für eine Zahl von 0 bis 3,

mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,03 bis 1 : 0,8 beträgt, dadurch gekennzeichnet, daß man als Titankomponente (1) eine solche einsetzt, die erhalten wird, indem man zunächst

(1.1) in einer ersten Stufe ein festphasiges Vorprodukt herstellt aus (I) feinteiligem Magnesiumchlorid, (II) einem $C_1$- bis $C_8$ -Alkanol, (III) einem feinteiligen, porösen, anorganisch-oxidischen Trägerstoff, der einen Teilchendurchmesser von 1 bis 1000 µm, ein Porenvolumen von 0,3 bis 3 $cm^3/g$ sowie eine Oberfläche von 100 bis 1000 $m^2/g$ besitzt und die Formel $SiO_2 \cdot a\ Al_2O_3$ - worin a steht für eine Zahl im Bereich von 0 bis 2 - hat, (IV) Titantetrachlorid sowie (V) einem Phthalsäureabkömmling der Formel

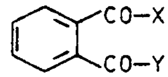

worin stehen X und Y gemeinsam für Sauerstoff oder X sowie Y für Chlor oder einen $C_1$- bis C10-Alkoxyrest, derart, daß man zuerst

entweder a)

(1.1.1.a) in einer ersten Unterstufe in einem flüssigen inerten Kohlenwasserstoff unter ständiger Durchmischung bei einer Temperatur im Bereich von 0 bis 140 ° C das Magnesiumchlorid (I) und den Alkanol (II) zusammenbringt, wobei mengenmäßig eingesetzt werden auf 10 Gewichtsteile des Magnesiumchlorids (I) 20 bis 1000 Gewichtsteile des Kohlenwasserstoffs sowie auf 10 Molteile des Magnesiumchlorids (I) 10 bis 80 Molteile des Alkanols (II) und das Zusammengebrachte während 0,1 bis 6 Stunden bei einer Temperatur im Bereich von 20 bis 140 ° C hält, anschließend

(1.1.2.a) in einer zweiten Unterstufe unter ständiger Durchmischung bei einer Temperatur im Bereich von 0 bis 140 ° C in das aus der ersten Unterstufe resultierende Reaktionsgemisch den Trägerstoff (III) einbringt, wobei mengenmäßig eingesetzt werden auf 10 Gewichtsteile des Magnesiumchlorids (I) 20 bis 100 Gewichtsteile des Trägerstoffs (III),

oder b)

(1.1.1.b) in einer ersten Unterstufe unter ständiger Durchmischung bei einer Temperatur im Bereich von 0 bis 140 ° C das Magnesiumchlorid (I) und den Alkanol (II) zusammenbringt, wobei mengenmäßig eingesetzt werden auf 10 Molteile des Magnesiumchlorids (I) 100 bis 1000 Molteile des Alkanols (II), und das Zusammengebrachte während 0,1 bis 6 Stunden bei einer Temperatur im Bereich von 20 bis 140 ° C hält, anschließend

(1.1.2.b) in einer zweiten Unterstufe unter ständiger Durchmischung bei einer Temperatur im Bereich von 0 bis 140 ° C in das aus der ersten Unterstufe resultierende Reaktionsgemisch den Trägerstoff (III) einbringt, wobei mengenmäßig eingesetzt werden auf 10 Gew.-Teile des Magnesiumchlorids (I) 20 bis 100 Gew.-Teile des Trägerstoffs (III), und das Ganze unter Gewinnung eines festphasigen Umsetzungsprodukts zur Trockene einengt,

und hierauf

(1.1.3) in einer dritten Unterstufe in einem flüssigen, inerten Kohlenwasserstoff unter ständiger Durchmischung bei einer Temperatur im Bereich von -20 bis 40 °C das in der zweiten Unterstufe erhaltene festphasige Umsetzungsprodukt und das Titantetrachlorid (IV) zusammenbringt, wobei mengenmäßig eingesetzt werden auf 100 Molteile des Alkohols (II) 20 bis 300 Molteile des Titantetrachlorids (IV) sowie auf 10 Gewichtsteile des Trägerstoffs (III) 10 bis 100 Gewichtsteile des Kohlenwasserstoffs, und das Zusammengebrachte während 0,1 bis 4 Stunden auf einer Temperatur im Bereich von 10 bis 150 °C hält und das dabei resultierende festphasige Vorprodukt unter Abtrennung der flüssigen Phase isoliert,

mit der Maßgabe, daß zumindest im Zuge einer der Unterstufen (1.1.1) bis (1.1.3) der Phthalsäureabkömmling (V) eingebracht wird, wobei mengenmäßig eingesetzt werden auf 100 Molteile des Magnesiumchlorids (I) 1 bis 100 Molteile des Phthalsäureabkömmlings, dann

(1.2) in einer zweiten Stufe das aus der ersten Stufe erhaltene festphasige Vorprodukt bei einer Temperatur im Bereich von 100 bis 150 °C während einer Zeitspanne von 0,2 bis 5 Stunden einer ein- oder mehrstufigen oder kontinuierlichen Extraktion mit Titantetrachlorid unterzieht, wobei mengenmäßig eingesetzt werden auf 10 Gewichtsteile des aus der ersten Stufe erhaltenen festphasigen Vorprodukts insgesamt 10 bis 1000 Gew.-Teile des Titantetrachlorids, und schließlich

(1.3) in einer dritten Stufe das in der zweiten Stufe gewonnene festphasige Zwischenprodukt solange mit einem flüssigen inerten Kohlenwasserstoff extrahiert, bis der Feststoff 0,01 bis 30 Gew.-% Titan enthält - und derart die Titankomponente (1) gewinnt.

## Claims

**1.** A process for the preparation of homopolymers of propene and copolymers of propene with minor amounts of other $C_2$-$C_{12}$-$\alpha$-monoolefins by polymerization of the monomer or monomers at from 20 to 160 °C under from 1 to 100 bar using a Ziegler-Natta catalyst system consisting of

(1) a titanium component which contains titanium, magnesium, chlorine and a benzenecarboxylic acid derivative on an inorganic oxide carrier,

(2) an aluminum component of the formula

$$Al\ R_3$$

where R is alkyl of not more than 8 carbon atoms,

and

(3) a silane component of the formula

$$R^1_n\ Si(OR^2)_{4-n}$$

where $R^1$ is an aryl or alkyl radical of not more than 16 carbon atoms, $R^2$ is alkyl of not more than 15 carbon atoms and n is from 0 to 3,

with the provisos that the atomic ratio of titanium from the titanium component (1) to aluminum from the aluminum component (2) is from 1:10 to 1:800 and the molar ratio of aluminum component (2) to silane component (3) is from 1:0.03 to 1:0.8, wherein the titanium component (1) used is one which is obtained by a method in which first

(1.1.) in a first stage, a solid-phase intermediate is prepared from (I) finely divided magnesium chloride, (II) a $C_1$-$C_8$-alkanol, (III) a finely divided, porous, inorganic oxide carrier which has a particle diameter of from 1 to 1,000 µm, a pore volume of from 0.3 to 3 $cm^3$/g and a surface area of from 100 to 1,000 $m^2$/g and is of the formula $SiO_2 \cdot a\ Al_2O_3$, where a is from 0 to 2, (IV) titanium tetrachloride and (V) a phthalic acid derivative of the formula

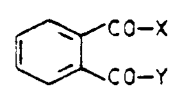

where X and Y together are oxygen or X and Y are each chlorine or $C_1$-$C_{10}$-alkoxy, by a procedure in which first

either a)

(1.1.1.a) in a first substage, the magnesium chloride (I) and the alkanol (II) are combined in an inert liquid hydrocarbon with continuous thorough mixing at from 0 to 140 °C, from 20 to 1,000 parts by weight of the hydrocarbon being used per 10 parts by weight of the magnesium chloride (I), and from 10 to 80 molar parts of the alkanol (II) being used per 10 molar parts of the magnesium chloride (I), and the substances combined are kept at from 20 to 140 °C for from 0.1 to 6 hours, after which

(1.1.2.a) in a second substage, the carrier (III) is introduced into the reaction mixture resulting from the first substage, with continuous thorough mixing at from 0 to 140 ° C, from 20 to 100 parts by weight of the carrier (III) being used per 10 parts by weight of the magnesium chloride (I),

or b)

(1.1.1.b) in a first substage, the magnesium chloride (I) and the alkanol (II) are combined with continuous thorough mixing at from 0 to 140 ° C, from 100 to 1,000 molar parts of the alkanol (II) being used per 10 molar parts of the magnesium chloride (I), and the substances combined are kept at from 20 to 140 ° C for from 0.1 to 6 hours, after which

(1.1.2.b) in a second substage, the carrier (III) is introduced into the reaction mixture resulting from the first substage, with continuous thorough mixing at from 0 to 140 ° C, from 20 to 100 parts by weight of the carrier (III) being used per 10 parts by weight of the magnesium chloride (I), and the entire mixture is evaporated to dryness to obtain a solid-phase reaction product, and thereafter

(1.1.3) in a third substage, the solid-phase reaction product obtained in the second substage and the titanium tetrachloride (IV) are combined in an inert liquid hydrocarbon with continuous thorough mixing at from -20 to 40 ° C, from 20 to 300 molar parts of the titanium tetrachloride (IV) being used per 100 molar parts of the alcohol (II), and from 10 to 100 parts by weight of the hydrocarbon being used per 10 parts by weight of the carrier (III), and the substances combined are kept at from 10 to 150 ° C for from 0.1 to 4 hours, and the resulting solid-phase intermediate is isolated with removal of the liquid phase, with the proviso that the phthalic acid derivative (V) is introduced in the course of one or more of the substages (1.1.1) to (1.1.3), from 1 to 100 molar parts of the phthalic acid derivative being used per 100 molar parts of the magnesium chloride (I), then

(1.2) in a second stage, the solid-phase intermediate obtained in the first stage is subjected to a single-stage or multistage or continuous extraction with titanium tetrachloride at from 100 to 150 ° C for from 0.2 to 5 hours, a total of from 10 to 1,000 parts by weight of the titanium tetrachloride being used per 10 parts by weight of the solid-phase intermediate obtained in the first stage, and finally

(1.3) in a third stage, the solid-phase intermediate obtained in the second stage is extracted with an inert liquid hydrocarbon until the solid contains from 0.01 to 30% by weight of titanium, and the titanium component (1) is obtained in this manner.

## Revendications

**1.** Procédé de préparation d'homopolymères du propylène ainsi que de copolymères du propylène avec des quantités mineures d'autres $\alpha$-monooléfines en $C_2$ à $C_{12}$, par polymérisation du au des monomères à des températures de 20 à 160 ° C et sous des pressions de 1 à 100 bar, au moyen d'un système catalytique de Ziegler-Natta comprenant

(1) un composant à base de titane, qui contient du titane, du magnésium, du chlore, ainsi qu'un dérivé d'acide benzènecarboxylique, sur un support oxydé inorganique,

(2) un composant à base d'aluminium de formule

$$Al\ R_3,$$

dans laquelle
R est mis pour un reste alkyle ne renfermant pas plus de 8 atomes de carbone,
ainsi que

(3) un composant silane de formule

$$R^1_n\ Si(OR^2)_{4-n},$$

dans laquelle
R' est mis pour un reste aryle ou alkyle ne renfermant pas plus de 16 atomes de carbone,
$R^2$ est mis pour un reste alkyle ne renfermant pas plus de 15 atomes de carbone,
n est mis pour un nombre de 0 à 3,

étant spécifié que le rapport atomique du titane du composant à base de titane (1) à l'aluminium du composant à base d'aluminium (2) est compris entre 1:10 et 1:800 et que le rapport moléculaire du composant à base d'aluminium (2) au composant silane (3) est compris entre 1:0,03 et 1:0,8, caractérisé en ce qu'on utilise, en tant que composant à base de titane

(1) un composant pour l'obtention duquel

(1.1) dans une première étape, on prépare un progéniteur en phase solide à partir : (I) de chlorure de magnésium finement divisé, (II) d'un alcanol en $C_1$ à $C_8$, (III) d'un support oxydé inorganique, poreux, finement divisé, qui a un diamètre de particules de 1 à 1000 $\mu$m, un volume de pores de 0,3 à 3 $cm^3/g$ et une surface spécifique de 100 à 1000 $m^2/g$ et qui répond à la formule $SiO_2 \cdot a\ Al_2O_3$ - où a est mis pour un nombre

dans la gamme de 0 à 2 -, (IV) de tétrachlorure de titane et (V) d'un dérivé d'acide phtalique de formule

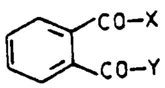

dans laquelle X et Y sont mis en commun pour un atome d'oxygène ou sont mis chacun pour un atome de chlore ou pour un reste alcoxy en $C_1$ à $C_{10}$,
ce progéniteur étant obtenu en commençant par appliquer,
soit la méthode a), c'est-à-dire
(1.1.1.a) dans une première sous-étape, en mettant en contact, dans un hydrocarbure inerte liquide, sous mélange constant et à une température dans la gamme de 0 à 140°C, le chlorure de magnésium (I) et l'alcanol (II), avec utilisation, pour 10 parties en poids du chlorure de magnésium (I), de 20 à 1000 parties en poids de l'hydrocarbure et, pour 10 parties en moles du chlorure de magnésium (I), de 10 à 80 parties en moles de l'alcanol (II), et en maintenant le mélange pendant 0,1 à 6 h à une température dans la gamme de 20 à 140°C, puis
(1.1.2.a) dans une deuxième sous-étape, en introduisant le support (III), sous mélange constant et à une température dans la gamme de 0 à 140°C, dans le mélange réactionnel résultant de la première sous-étape, avec utilisation, pour 10 parties en poids du chlorure de magnésium (I), de 20 à 100 parties en poids du support (III),
soit la méthode b), c'est-à-dire
(1.1.1.b) dans une première sous-étape, en mettant en contact, sous mélange constant et à une température de 0 à 140°C, le chlorure de magnésium (I) et l'alcanol (II), avec utilisation, pour 10 parties en moles du chlorure de magnésium, de 100 à 1000 parties en moles de l'alcanol (II), et en maintenant le mélange pendant 0,1 à 6 h à une température dans la gamme de 20 à 140°C, puis
(1.1.2.b) dans une deuxième sous-étape, en introduisant le support (III), sous mélange constant et à une température dans la gamme de 0 à 140°C, dans le mélange réactionnel résultant de la première sous-étape, avec utilisation, pour 10 parties en poids du chlorure de magnésium (I), de 20 à 100 parties en poids du support (III), et en concentrant le tout à siccité pour obtenir un produit réactionnel en phase solide,
et ensuite
(1.1.3) dans une troisième sous-étape, en mélangeant, dans un hydrocarbure inerte liquide, sous mélange constant et à une température dans la gamme de -20 à 40°C, le produit réactionnel en phase solide obtenu dans la deuxième sous-étape et le tétrachlorure de titane (IV), avec utilisation, pour 100 parties en moles de l'alcool (II), de 20 à 300 parties en moles du tétrachlorure de titane (IV) et, pour 10 parties en poids de la matière de support (III), de 10 à 100 parties en poids de l'hydrocarbure, en maintenant le mélange pendant 0,1 à 4 h à une température dans la gamme de 10 à 150°C, et en isolant le progéniteur en phase solide résultant, avec séparation de la phase liquide,
étant spécifié qu'au moins au cours de l'une des sous-étapes (1.1.1) à (1.1.3), le dérivé d'acide phtalique (V) est introduit, avec utilisation, pour 100 parties en moles du chlorure de magnésium (I), de 1 à 100 parties en moles du dérivé d'acide phtalique,
après quoi
(1.2) dans une deuxième étape, on soumet le progéniteur en phase solide obtenu dans la première étape, à une température dans la gamme de 100 à 150°C et pendant un laps de temps de 0,2 à 5 h, à une extraction en un ou plusieurs stades ou en continu avec du tétrachlorure de titane, avec utilisation, pour 10 parties en poids du progéniteur en phase solide obtenu dans la première étape, de 10 à 1000 parties au total du tétrachlorure de titane,
et enfin
(1.3) dans une troisième étape, on extrait le produit intermédiaire obtenu dans la deuxième étape, avec un hydrocarbure inerte liquide, jusqu'à ce que la matière solide contienne de 0,01 à 30% en poids de titane - et on obtient de la sorte le composant à base de titane (1).